(19) Europäisches Patentamt
European Patent Office
Office européen des brevets

(11) **EP 4 376 277 A2**

(12) **EUROPEAN PATENT APPLICATION**

(43) Date of publication:
**29.05.2024 Bulletin 2024/22**

(21) Application number: **24154921.1**

(22) Date of filing: **13.02.2018**

(51) International Patent Classification (IPC):
*H02K 53/00* (2006.01)

(52) Cooperative Patent Classification (CPC):
**H02K 1/24; H02K 1/165; H02K 11/012; H02K 13/003**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2017 US 201762600055 P**

(62) Document number(s) of the earlier application(s) in accordance with Art. 76 EPC:
**18705599.1 / 3 580 833**

(71) Applicant: **Holcomb Scientific Research Ltd. Dublin D07 P4AX (IE)**

(72) Inventor: **Holcomb, Robert Ray Sarasota, Florida (US)**

(74) Representative: **FRKelly Waterways House Grand Canal Quay Dublin D02 PD39 (IE)**

Remarks:
This application was filed on 31.01.2024 as a divisional application to the application mentioned under INID code 62.

(54) **LOW REVERSE TORQUE, HIGH EFFICIENCY ELECTRIC POWER GENERATORS WITH UNI-POLE ROTORS**

(57) A uni-pole rotor for an electrical power generator includes two separate electromagnets formed on rotor laminates and separated by a mu metal shield. The laminates further include two separate winding wire slots on either side of the mu metal shield which slots are wound with magnet wire to serve as rotor coils of the two separate electromagnets. The two separate electromagnets, when excited, create magnetic fluxes of a first polarity and a second polarity such that outer fluxes of the rotor are of the first polarity and the inner fluxes of the rotor are of the second polarity. The uni-pole rotor further includes electrical leads to the rotor coils such that leads are used to excite in an alternating fashion a positive and negative DC current in the rotor coils which allows alternation of 360° north pole with 360° south pole generation on the outer portion of the rotor laminates of the rotor.

*FIG. 1*

**Description**

**FIELD OF INVENTION**

Structures, systems, and methods for generation of alternating current (AC) or direct current (DC) with reduced electromagnetic drag or reverse torque, thereby improving the operating efficiency of the generator.

**BACKGROUND**

Rapid depletion of the Earth's fossil fuel sources along with environmental pollution of land, air, and water with simultaneous climate change makes obvious the clear and urgent need for alternative energy supplies that are efficient, requiring no fossil fuels and are nonpolluting.

A significant contribution to safely resolving the Earth's population's demand for increasing energy consumption is to increase the efficiency of electrical power generation by removing reverse torque from a rotary electric power generator. Removal of reverse torque from rotary generators associated with converting mechanical energy into electrical power may provide an opportunity for an electrically powered, highly efficient power generation plant. Removal of reverse torque allows an alternating current (AC) or direct current (DC) generator to operate with a significant increase in efficiency, thereby driving the generator of a power generation plant with a smaller electric motor.

The World's first known electrical generator was Faraday's disk dynamo. Michael Faraday discovered the operating principle of electromagnetic generators in the years 1831 - 1889. His observations were later reduced into a principle called Faraday's Law written by James Clerk Maxwell. The Law states that an electromagnetic force is generated in an electrical conductor that encircles a varying magnetic flux. Faraday built the first magnetic rotary induction generator called a Faraday Disc. This first generator was a type of homo-polar generator, using a copper disc rotating between poles of a horseshoe magnet. This generator produced a small DC voltage, but high amperage. The Faraday dynamo or uni-pole (or uni-polar) generator, however, did not lend itself well to practical commercial development because of the nature of its output, i.e., very low DC voltage at extremely high current. The Faraday generator does lend itself well, however, to the study of the mechanisms of reverse torque in electrical induction machines.

Conventional generators in use today require by common definition, 1 horsepower (HP) of kinetic energy input to generate 746 watts (W) of electrical energy. This relationship of mechanical horsepower to electrical watts involves derived units of power which have evolved from observations and measurements on physical and electrical machines (as well as horses).

The term "watt" was named after James Watt, a Scottish scientist, for his work on improving the steam engine and quantifying the power of the steam engine. The unit "watt" was recognized by the Second Congress of the British Association for the Advancement of Science in 1889, concurrent with the start of commercial power production. The dynamo was the first electrical generator capable of delivering power to industry and is still an important generator in use even to this day. The dynamo uses a particular machine design and electromagnetic principles to convert mechanical rotation of magnetic poles into an alternating electric current. The first commercial power plants, which were operated in Paris in the 1870's, were designed by Zenobe Gramme. The use of electric generators made it desirable to establish a common unit for electrical power in order to conventionalize this newly evolving energy source. The watt is a derived unit of power (i.e., an algebraic combination of base units). The watt is now an approved unit of the International System of Units (SI).

As defined, 1 watt is the rate at which work is done when an object's velocity is held constant at 1 meter per second against a constant opposing force of 1 Newton.

$$W = J/S = N.M/S = Kg.M^2/S^3$$

$$J = Joule \quad M = Meter \quad N = Newton \quad Kg = Kilogram$$

Joule = Work done when a force of 1 Newton is displaced through a distance of 1 Meter
1 Joule = 1 watt-second, $10^7$ ergs = 0.2390 calories or 0.738 foot-pound (ft-lb).

Therefore, if one mechanical horsepower is equal to 550 ft-lb per second (or 33,000 ft-lb per minute), then by definition of the watt being 0.738 ft-lb per second, 1 HP = 550 ft-lb per second / 0.738 ft-lb per second = 745.257 W, and by definition, the electrical watt is the rate at which work is done when 1 ampere (A) of current flows through an electric potential difference of 1 volt (V):

$$W = V \times A$$

745.257 watts = 27.299 V $\times$ 27.299 A or any combination of amps and volts in which the product is equal to 745.257 watts. Therefore, by definition and derivation, 1 HP = 746 watts.

The original work on which these units hinge was performed by James Watt who introduced the term "horsepower" when he wanted to explain how powerful his steam engines were compared to horses. After some tests (not with engines, rather with horses), he established that, on average, the horses being used could pull coal up a mine shaft at the rate of 22,000 ft-lb per minute. For whatever reason, he decided to raise this number by 50% and arrived at a number which is commonly accepted as 33,000 ft-lb per minute. So, if an engine or any rotary machine may push 33,000 lbs. of something 1 foot in 1 minute, the machine is considered a 1 HP engine.

As noted above, a conventional generator requires, by definition, 1 HP to generate 746 watts plus enough additional horsepower to turn the physical mechanisms of the rotor at proper speed to maintain the desired frequency. The horsepower required to spin the mechanism is usually about 0.2 HP in a conventional generator to generate 746 watts for a total 1.2 HP needed to generate the 746 watts, although only 0.2 HP of that energy is used to actually generate the electrical power. The remaining 1 HP, which is equal to 746 watts, is required to overcome the reverse torque or so-called "back electromotive force" (back EMF).

The back EMF or reverse torque of rotary generators in use today can best be described by reference to "Lenz's Law." It, in summary, states that when an EMF is generated by a change in magnetic flux, according to Faraday's Law, the polarity of the induced EMF is such that it produces a current whose magnetic field opposes the magnetic flux which produces it. The induced magnetic field inside a loop of wires acts to keep the magnetic flux in the loop constant. If the magnetic field B is increasing, the induced magnetic field acts in equal and opposite direction to it; if it is decreasing, the induced magnetic field acts in the direction of the applied field with equal force. In conventional generators, the rotor is stationed inside the coil loops of the stator and rotates to generate a current in the stator which in turn generates a magnetic field which is equal in force and opposite in polarity to magnetic field B. Thus, reverse torque is a product of the design or design flaw of conventional generators.

In the case of the generators of the present disclosure, the rotors are outside of the coil loop and, thus, do not interact with the induced pole. This induced pole is induced by current flow and is not responsible for a current flow, as is evidenced by the fact that the generator reaches full voltage prior to current going to an electrical load.

In a conventional generator, due to the reverse torque, about 85% more mechanical energy is required to turn the rotor than is required to generate power. However, in the case of the current disclosure, the generators only require energy to turn the mechanical mechanisms of the generator or about 20% of output power to drive the generator. Therefore, the systems and methods take that 20% and cycles it back to drive the generator and the remaining 80% is usable electric power to be used for whatever purpose is required.

The Lenz losses, as noted above, are related to inductive coupling between the rotor standing poles and the stator induced poles. In addition to our current work and observations on reduction of reverse torque, Nikola Tesla published an article entitled "Notes on an Unipolar Dynamo", Nikola Tesla, The Electrical Engineer, N.Y. September 2, 1891. Tesla reported upon a modification of the Faraday Dynamo design. Tesla's design varied in two major ways:

1. First, he used a magnet that was bigger in diameter than the disc, so that the magnet completely covered the disc.
2. Second, the divided the disc into sections with spiral curves out from the center of the outside edge.

The Tesla modification caused the current to make a full trip around the outside edge of the disc. Because the current is flowing in a large circle at the rim of the disc, the magnetic field created does not work against the field magnet. This modification eliminated the biggest problem of electric power generation, i.e. the reaction to every action or as is commonly called, reverse torque or back EMF.

This design change and its effect on reverse torque were accomplished by geometric isolation of the standing pole from the induced pole of the machine. In the case of the present disclosure, the rotors are outside of the induction coil loop. Therefore, the standing coils of the rotor are geometrically isolated from the induction coils of the stator. The induced pole is induced by current flow which is generated by the standing pole. The induced pole, as noted above, is not responsible for current flow or power generation in the induced coils. This design change fully removes Lenz losses produced by the induced stator poles attracting and repelling polar coupling between the stator poles and the rotor poles. To the extent that stator/rotor coupling occurs, it will act to produce additional magnetic drag upon the rotor which is linearly proportional to the load current drawn and thereby to satisfy Lenz Law.

The generators of the present disclosure are, for all practical purposes, free of reverse torque due to four design changes when compared to conventional electric rotary generators:

1. *Geometric Isolation* - Each stator armature induction coil is located in two (2) separate rotor cavities, such that only one side of a stator coil is in close proximity to one magnetized rotor, while the opposite side of the coil is in close proximity to a second magnetized rotor. Both rotors are outside of the closed induction loop. The reverse torque of a conventional generator is formed when a single rotor excites both sides of the stator coil; one being at least one north pole and at least one south pole, therefore by the observations of Lenz Law there is an induced current in a closed loop if the magnetic flux through the loop is changing. The direction of the induced current is such that the induced magnetic field opposes the change in flux. In the case of the high efficiency generators disclosed herein, the magnetic field of the rotor is geometrically removed and isolated from the magnetic axis (or center line) of the stator magnetic pole. Therefore, reverse torque does not occur to any significant extent due to this geometric separation of the would-be opposing magnetic poles.

2. *Singular Stator Winding Pattern* - The stator armature is wound with lapping coils in the wire slots such that the direction of current flow in the lapping coils is identical in all slots of the individual rotor cavities. However, as the coils exit the stator induction slots, the coils are physically wound in opposite directions thereby creating opposite magnetic polarities and effectively canceling available magnetic polarity which could otherwise form some small amount of effective reverse torque.

3. *Shielding* - The stator armature iron also contains a series of mu metal shields between wire slots which allows flux linkage between the narrow segments of side iron and back iron and the rotor flux such that the armature coil inductive power generation is attained. However, no significant reverse torque is developed.

4. *Unique rotor design* - The pole rotor is a singular alternating uni-polar or uni-pole (functional single-pole) rotor. The design allows north magnetic pole flux for 360° of rotation followed by south magnetic pole flux for 360° of rotation. The rotor does not exhibit a detectable magnetic center pole or center line which could tend to line up on small magnetic poles of the stator and thereby develop some counter-torque. The rotor magnetic coils are excited through slip rings by a solid state DC excitation system which allows alternation between north magnetic pole and south magnetic pole for a full 360° of rotor surface. The frequency can be controlled by, for example, a separate small motorized sensor wheel and programmable logic controller (PLC) which may be regulated to any desired frequency, through a computer control regardless of the speed of the generator rotors.

## SUMMARY

Various exemplary embodiments are discussed and described herein involving aspects of an electric machine, such as a generator that produces power with high efficiency and very low reverse torque. The mechanisms of removal of this reverse torque and the relevance of the elimination of the reverse torque to its uses and applications are presented and discussed.

In accordance with an aspect, apparatus, systems, and methods are disclosed for reducing drag in an electric generator that includes a change in the geometric design, placement of a unique series of uni-pole rotors in relation to the stator coils along with a system of magnetic shielding which results in minimal destructive interaction of the rotor magnetic fields with the magnetic fields of the stator when the generator is connected to an electric load. The disclosed redesign includes distributing first members of slot rotor pairs along the outer periphery of a first stator section having induction windings accommodated in slots. Second members of the slot rotor pairs are distributed along the outer periphery of a second stator section having induction windings accommodated in slots. The slots of the first stator section and the second stator section are axially aligned along a lengthwise and depth-wise axis. The outer periphery of the second stator section may also correspond to an "inner circumference" where reference is made to a circular or suitable shaped stator embodiment. The inner periphery of the first stator section and the inner periphery of the second stator section are adjacent to each other. The first members and second members of the slot rotor pairs include slot rotors having at least one pair of wound armature pole sections of an alternating first and second magnetic polarity. The first and second magnetic polarity can be alternated in sequence such that each rotor operates as an alternating uni-polar rotor (i.e., north pole for 360° of rotor surface, alternated with south pole for 360° of rotor surface). The alternating north pole - south pole for 360° of surface is made possible by the design and winding pattern described herein. The first and second polarity of slot rotor pairs can be rotated in a magnetically synchronized manner such that the first pole having a first magnetic polarity and a second magnetic polarity of a second pole are located in geometric adjacent corners of the first stator and second stator sections, such that a first side of a stator armature coil is excited by a first magnetic pole, a second side of the stator armature coil is excited by a second magnetic polarity such that maximum flux density is provided in the induction windings in order to induce a current flow therein. The first member and the second member of the respective slot rotor pairs are aligned with the aligned skewed slots of the first stator section and the second stator section along respective lengthwise axis of the first and second members of the slots such that the lengthwise axis of the first and second members are in normal alignment with the depth-wise axis of the stator slots.

The first and second members can be magnetically shielded such that flux generated by the first and second members is directed only into the slots so as to minimize flux linkage and minimize magnetic drag resulting from interaction of the rotor pairs with the stator magnetic fields. The first members and the second members shielding can be inserted into respective openings provided in the first and second stator sections in the tooth iron between the skewed stator slots such that only the tooth iron directly over the area of the slot is exposed to the magnetic field of the first and second magnetic polarity of the rotors.

The first and second members do not have to be driven in a synchronized manner because the alternating first and second magnetic polarities are synchronized by a solid state programmable logic controller (PLC) excitation system which fires the appropriate lead of the uni-pole magnetic polarity when the PLC receives a signal from a photocell sensor and wheel sensor driven by a drive motor at any desired frequency especially 50 or 60 Hz.

Alternating current (AC) can be generated when both the first and second members of the slot rotor pairs are provided with appropriate alternating first and second magnetic polarities. Direct current (DC) may be generated from the same slot rotor pairs when the first slot rotor of the pair generates only a first polarity and a second slot rotor generates only a second polarity. This allows for changing the generator from AC to DC and/or back to AC by changing the direction and duration of the excitation currents in the appropriate pole, which may be accomplished in a programming change in the excitation PLC controller which is slaved to a master computer.

Each slot rotor member has at least an alternating pair of uni-polar magnetic poles, i.e., alternating the first magnetic polarity with a second magnetic polarity. Each slot rotor member is capable of rotating about a longitudinal axis. The first and second rotors are uni-polar for the entire 360° of circumference of the first and second rotors. The uni-polar circuit is excited by a solid state switching system which allows all of the rotor windings to be switched in alternating directions, i.e., switched the entire rotor from north pole to south pole and south pole back to north pole, etc. This design allows the PLC solid state commutator circuit, which controls the excitation circuit to apply excitation current to the first slot rotor member and the second rotor member so as to generate the magnetic flux in the one of the magnetic poles of the first polarity associated with the slot rotor member 50 times per second (50 Hz) or 60 times per second (60 Hz) regardless of the position of the rotor in the rotational space and to generate the magnetic flux when the associated one of the magnetic poles of the second polarity associated with the second slot rotor member is applied with an excitation current thereby generating a magnetic flux of opposite polarity such that magnetic coupling occurs between the rotor magnetic pole, the side iron, back iron and stator slot coils. The design allows the generator rotor to be operated at any speed with the frequency being controlled by the excitation circuit rather than the speed of the rotors. This, in turn, allows flexibility in power output by increasing and decreasing the speed of the rotors without altering the frequency. For example, a generator operated at 3,000 rpm's can double the power output by increasing the speed up to 6,000 rpm's or conversely bring the power as low as desired by progressively decreasing the speed but maintaining the frequency by timed excitation of the rotor coils.

The structure of the rotor windings must be altered in order to operate as a functional uni-pole rotor. When a bipolar rotor is excited simultaneously with north pole - north pole or south pole - south pole, the internal poles cancel a large portion of the external flux. The uni-pole rotor disclosed herein is in actuality two complete dipole electromagnets combined and separated by a mu metal/steel flux return plate, but contained within the single rotor. When dipole magnet A with coils (a) and (b) is excited, (a) is excited in a north pole direction and (b) is excited in a south pole direction with (a) being on the outer rotor surface with the rotor; simultaneously magnet B of the "uni-pole" contains coils (c) and (d), (c) is excited south pole while (d) is excited north pole. This isolation of magnetic coils A and B from each other allows full north pole flux for 360° of rotor surface and allows alternation with south pole flux for 360° of rotor surface. The functionality of this uni-pole rotor is further improved by a necessary skewing of the coil winding slots which are separated 180° one from the other. The skew should be about 2 cm and skewed in opposite direction from the stator slot skew.

The first member and the second member of the respective slot rotor pairs can be aligned with the aligned slots of the first stator section and the second stator section along respective lengthwise axis of the first and second members and the slots such that the lengthwise axis of the first and second members are in normal alignment with the depthwise axis of aligned slots.

Regarding the openings for the first members and the second members shielding , the openings can be arranged in lengthwise alignment with the slots, to partially shield the first and second members and can be provided with a longitudinal opening corresponding to a longitudinal opening of the slots in order to provide magnetic communication with the corresponding longitudinal openings of the slots and ultimately to the windings disposed therein.

The opening in the first and second stator sections opening is approximately 45° to 180° openings. The openings are necessary to accommodate the stator coil winding process or the openings can be eliminated by severing each coil turn and placing connectors on the coil ends which may be reconnected as the coils are placed into the stator induction coil slots. After the first and second member rotor shields are in place, the openings are closed by placement of laminated electrical steel shield covers. This 360° laminated shielded rotor tunnel provides equal attraction for the magnetized rotors for 360° of rotation. In operating conditions, a magnetic bearing effect is provided, thereby eliminating drag between the magnetized rotor poles and the stator iron.

The first and second members of the slot rotor pairs can be rotated about their axis in opposite directions over the slots such that the net torque generated by the polar force interaction between the first and second members is approximately zero and in specific cases can be a net negative torque. Accordingly, as the first one of the pole sections of the first members having the first magnetic polarity is rotated over a slot in a first direction, the second one of the pole sections of the second member can be sequenced such that it presents the second magnetic polarity opposite the first magnetic polarity in order to maximize the flux density in the aligned slots. The second one of the pole sections is being rotatable in a second direction opposite the first direction to form a magnetic circuit between the first and second magnetic polarities. An excitation current in an armature of the first one of the pole sections of the first member having the first magnetic polarity at an instant in time when the excitation current in an armature of the second one of the pole sections of the second member having the second magnetic polarity can be similarly turned on. Alternating current (AC) can be generated when both the first and second members of the slot rotor pairs are provided with appropriate alternating first and second magnetic polarities. Direct current (DC) may be generated from the same slot rotor pairs when the first slot rotor pair of the pair generates only a first polarity and the second slot rotor pair generates only a second polarity. This allows changing the generator from AC to DC by changing the excitation currents in appropriate poles, which may be accomplished by a programming change in the excitation PLC. The first and second members can be shielded such that flux generated when an excitation current is supplied to the armatures of the first and second members is directed substantially towards the slots. The induction winding can be connected for alternating current, direct current and in single-phase or three-phase, high wye or low wye, however a delta connection is not prohibited.

In accordance with another exemplary aspect of the present disclosure, an electromagnetic assembly for an electric generator can be provided that includes a dual stator having a first stator section and a second stator section. A first polarity of slots is arranged on an outer periphery of the second stator section. Again, as noted above, with respect to a closed geometric arrangement stator, the outer periphery of the second stator section can refer to an "inner circumference." Respective inner peripheries of the first and second sections are disposed in adjacent relation and can include a back iron disposed there between to improve magnetic coupling through the slots. Each of the first and the second polarity of slots are aligned along a lengthwise and depthwise axis to form slot pairs, each of the polarity of the slots having induction coil windings disposed therein. The assembly can further include slot rotor pairs associated with the slot pair. Each of the slot rotor pairs has a first slot member disposed in aligned relation with one of the first polarity of slots and a second slot rotor member disposed in aligned relation with one of the second polarity of slots corresponding to the slot pair. Each slot rotor member has at least a pair of magnetic poles with one of the pair of magnetic poles having a first magnetic polarity and another of the pair of magnetic poles having a second magnetic polarity. Each slot rotor member can rotate about a longitudinal axis. The slot rotor pairs are disposed along the slot pairs such that the induction coil winding disposed in the slot pairs are exposed to magnetic flux generated by the slot rotor pairs. Each slot rotor member can be provided with a shield having an opening portion over the slots to direct the flux into the slots but minimize external flux leakage. In addition, a shield section can be provided for shielding magnetic flux from the first and second slot rotor members and end teeth portion of the first stator section and the second stator section. The shielding can be made from mu metal. The first slot rotor member and the second slot rotor member can be rotated such that when magnetic flux of one of the magnetic poles of the first polarity associated with the first slot rotor member is directed to a corresponding first slot of the slot pair, and magnetic flux of an associated one of the magnetic poles of the second polarity associated with the second slot rotor member is directed to a corresponding second slot of the slot pair, such that induction coil winding disposed in the first and second slots are exposed to increased magnetic flux and leakage of the magnetic flux is minimized. The first polarity of slots can include 48, but not limited to 48, wire slots, and the second polarity of slots can include 48, but not limited to 48, wire slots. Each of the first stator section and the second stator section can have a substantially circular shape where the first stator section and the second stator section are concentric about a longitudinal axis of the dual stator. Alternatively, the first stator section and the second stator section are planar. In another embodiment, the first polarity of slots includes four wire slots, and the second polarity of slots can include four wire slots. Each of the first stator sections and the second stator section can have a substantially square shape with the wire slots located in the corners of the square, where the first stator section and the second stator section are concentric about a longitudinal axis of the dual stator. This affords geometric isolation from the magneto motive poles in the stator which greatly reduces the drag forces between the stator and magnetized rotors. The first polarity of slots and the second polarity of slots may contain up to 12 wire slots, but not limited to 12, each without significant increase in drag forces.

The excitation circuit can include a commutator circuit (either mechanical or solid state) associated with the first and second slot rotor members, the commutator circuit selectively coupling one of the first and second slot rotor members to the excitation current as the appropriate ones are rotated in timing sequence.

## BRIEF DESCRIPTION OF THE DRAWINGS

The accompanying drawings, which are incorporated in and constitute part of this specification, and together with the description, illustrate and serve to explain the principles of various exemplary embodiments. In the drawings, in which like reference numerals designate similar or corresponding elements, regions, and portions:

FIG. 1 is a diagram illustrating a lateral view of an exemplary uni-pole rotor unit revealing the skewed rotor slots, slip rings, bearing rest, and windings, consistent with embodiments of the present disclosure.

FIG. 2 is a diagram illustrating an exemplary effect of excitation polarity of 180° separation between magnetic poles on the external magnetic flux field which is emanated in a dipole configuration and a uni-pole configuration.

FIG. 2a is a diagram illustrating a cross-sectional view of an exemplary rotor laminate and a slot wedge of the uni-pole rotor, consistent with embodiments of the present disclosure.

FIG. 2b is a diagram illustrating the internal polarity for an exemplary north-pole uni-pole rotor, consistent with embodiments of the present disclosure.

FIG. 2c is a diagram illustrating the internal polarity for an exemplary south-pole uni-pole rotor, consistent with embodiments of the present disclosure.

FIG. 2d is a diagram illustrating the internal windings for an exempalry north-pole uni-pole rotor, consistent with embodiments of the present disclosure.

FIG. 2e is a diagram illustrating the internal winding and polarity for an exemplary south-pole uni-pole rotor, consistent with embodiments of the present disclosure.

FIG. 3 is a diagram illustrating two views of an exemplary rotor shaft with the bearing rest, keyways, and mu metal shield spiral shaft slot for a uni-pole rotor, consistent with embodiments of the present disclosure.

FIG. 4 is a diagram illustrating two views of an exemplary mu metal laminate of the uni-pole rotor, wherein the laminate is spiraled as it is inserted, consistent with embodiments of the present disclosure.

FIG. 5 is a diagram illustrating an end view of an exemplary retention ring endplate of a uni-pole rotor, consistent with embodiments of the present disclosure.

FIG. 6 is an end view of an exemplary tie-down bracket for securing the end portion of the rotor windings of a uni-pole rotor, consistent with embodiments of the present disclosure

FIG. 7 is a cross-section of an exemplary stator magnetic pole concentration laminated support structure, with four rotor cavities and stator pieces contained in the support structure, consistent with embodiments of the present disclosure.

FIG. 8 is a cross-section of the exemplary stator magnetic pole concentration support structure of FIG. 7, illustrating exemplary coil conduits, consistent with embodiments of the present disclosure.

FIG. 9 is a lateral view of half of a 3-phase assembly of exemplary generators, each exemplary generator of which containing the exemplary uni-pole/stator structure illustrated in FIGs. 1, 3, and 7, consistent with embodiments of the present disclosure.

FIG. 10 is a view of an exemplary stator coil with severed coil turns containing coil turn connectors for use in the generators disclosed herein, consistent with embodiments of the present disclosure.

FIG. 11 is a diagram illustrating a cross section of an exemplary stator, stator iron, rotor windings, uni-pole rotors, mu metal shields, and laminated steel mu metal shield covers of an exemplary generator disclosed herein, consistent with embodiments of the present disclosure.

## DETAILED DESCRIPTION

Embodiments herein include systems and methods. At least some disclosed methods may be executed, for example, by at least one processor that receives instructions from a non-transitory computer-readable storage medium. Similarly, systems consistent with the present disclosure may include at least one processor and memory, and the memory may be a non-transitory computer-readable storage medium. As used herein, a non-transitory computer-readable storage medium refers to any type of physical memory on which information or data readable by at least one processor may be stored. Examples include random access memory (RAM), read-only memory (ROM), volatile memory, nonvolatile memory, hard drives, CD ROMs, DVDs, flash drives, disks, and any other known physical storage medium. Singular terms, such as "memory" and "computer-readable storage medium," may additionally refer to multiple structures, such a plurality of memories and/or computer-readable storage mediums. As referred to herein, a "memory" may comprise any type of computer-readable storage medium unless otherwise specified. A computer-readable storage medium may store instructions for execution by at least one processor, including instructions for causing the processor to perform steps or stages consistent with an embodiment herein. Additionally, one or more computer-readable storage mediums may be utilized in implementing a computer-implemented method. The term "computer-readable storage medium(s)" should be understood to include tangible items and exclude carrier waves and transient signals.

Reference will now be made in detail to the exemplary embodiments implemented according to the disclosure, the examples of which are illustrated in the accompanying drawings.

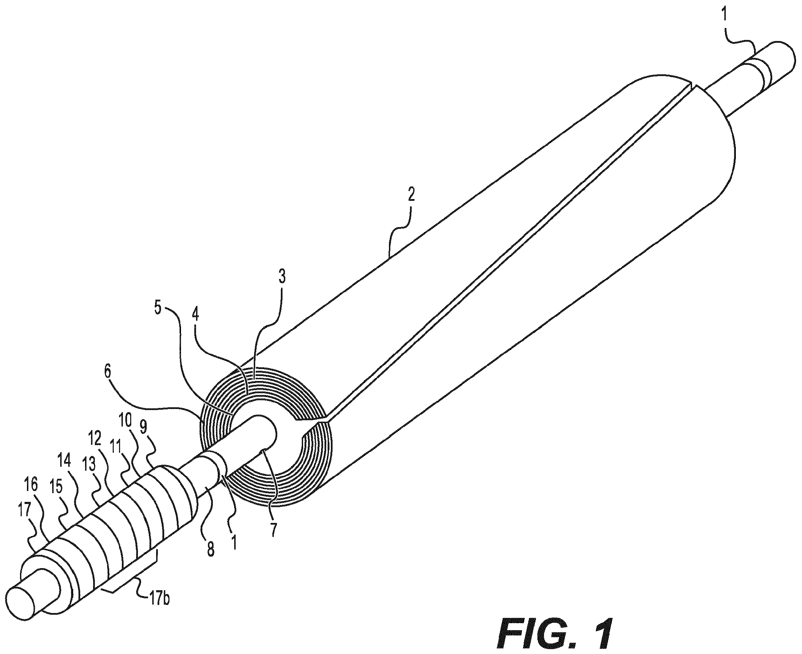

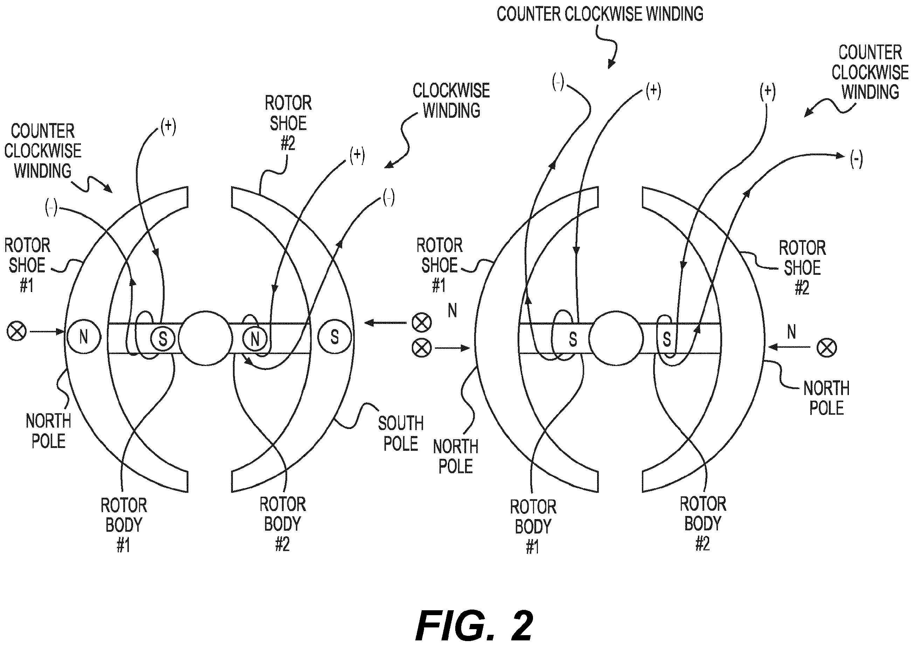

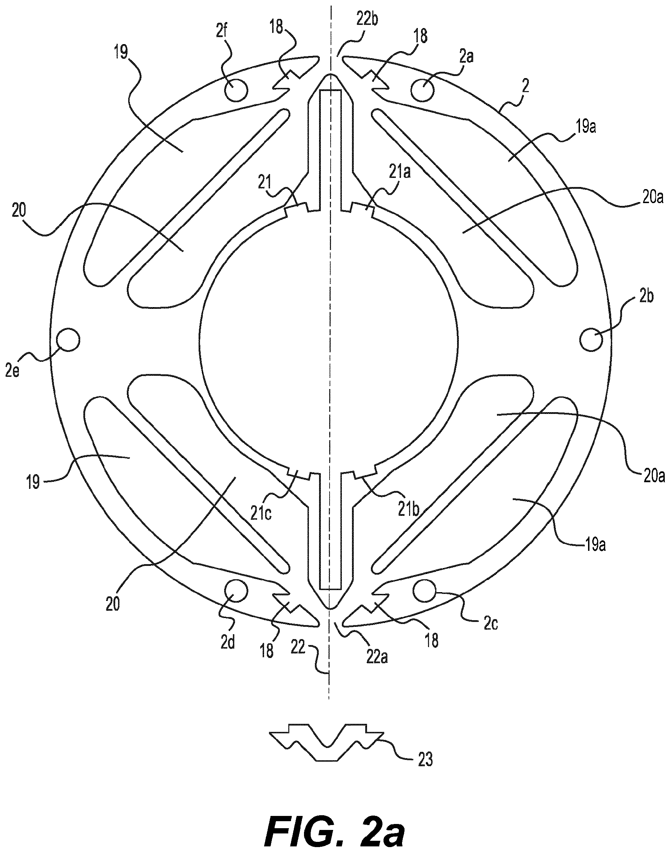

In accordance with various exemplary embodiments discussed and described herein by way of brief summary, an exemplary high efficiency generator with greatly reduced electromagnetic drag requires a uni-pole rotor containing two separate electromagnets separated by a laminated mu metal magnetic flux shield. FIG. 1 is a diagram illustrating an exemplary uni-pole rotor and slip ring assembly 17b with slip rings 9-17 capable of providing excitation of a positive and negative lead to each of four separate electromagnets discussed below with respect to FIGs. 2a-2e and one eddy current ground. The rotor body is made by laser cut discs of 0.34 mm, for example, annealed electrical steel which are stacked on a jig in such a fashion that the wire slots on either side are skewed from the slip ring end to the non-slip ring end of the rotor. The laminates are then dipped in insulation varnish and baked at, for example, 300°F until cured. The rotor body 2 is depicted containing four electromagnetic coils 3 which are made up internally and are electrically excited by slip rings 9-17 through appropriate leads, for example, leads 4, 5, 6, and 7. Shaft 8, bearing rests 1, and eddy current discharge lead 8 are also shown. The unnumbered slot in rotor body 2 is part of the wire slots 22a and 22b in the rotor laminates shown in FIGs. 2a-2e and discussed below. FIGs. 2a-2e also describe the exemplary four coils 3 in the uni-pole rotor.

In order to operate the electromagnetic uni-pole rotor, or to operate a first polarity electromagnet 180° separated from a second first polarity electromagnet and/or operate a second polarity electromagnet 180° separated from a second, second polarity electromagnet, structural winding and excitation changes must be altered from that of conventional electromagnetic rotors. Additionally, for the altered rotor to function as a uni-pole magnetic rotor, the structure of the rotor laminates and rotor winding must be altered in order to operate as a functional uni-pole electromagnetic rotor.

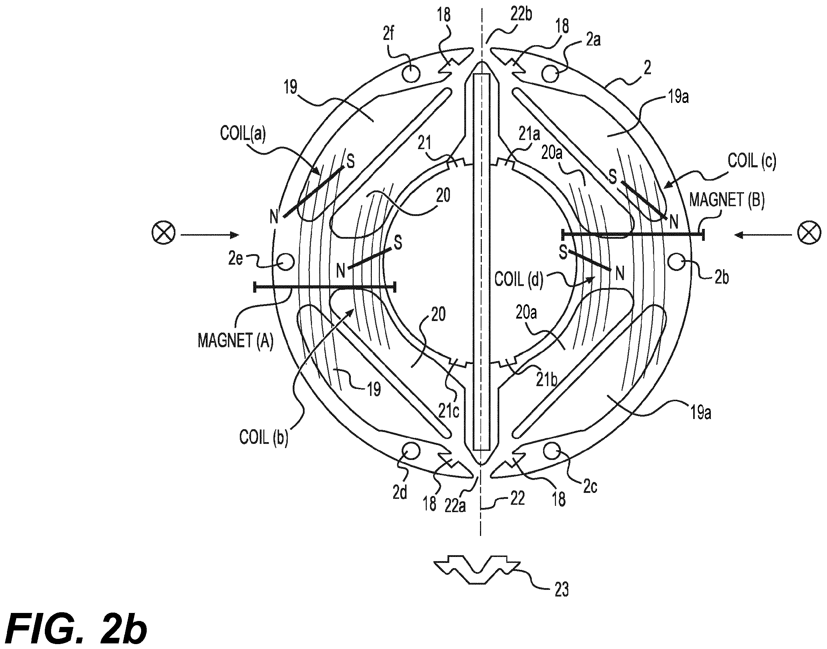

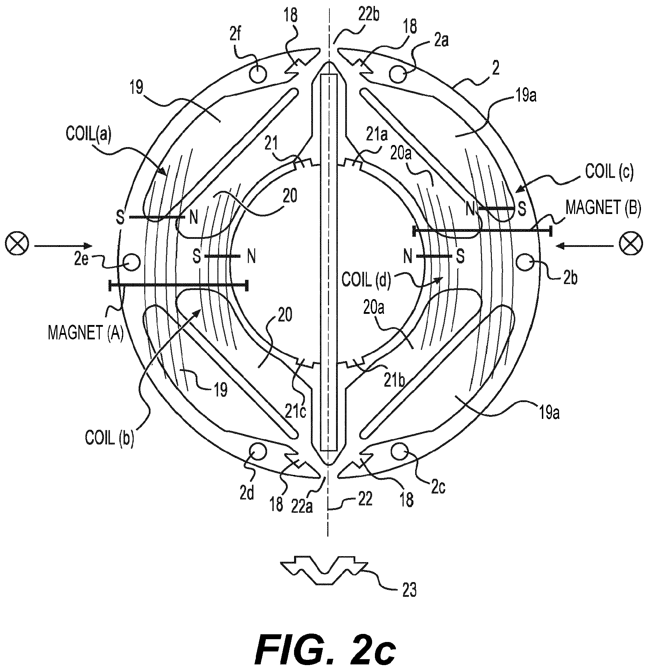

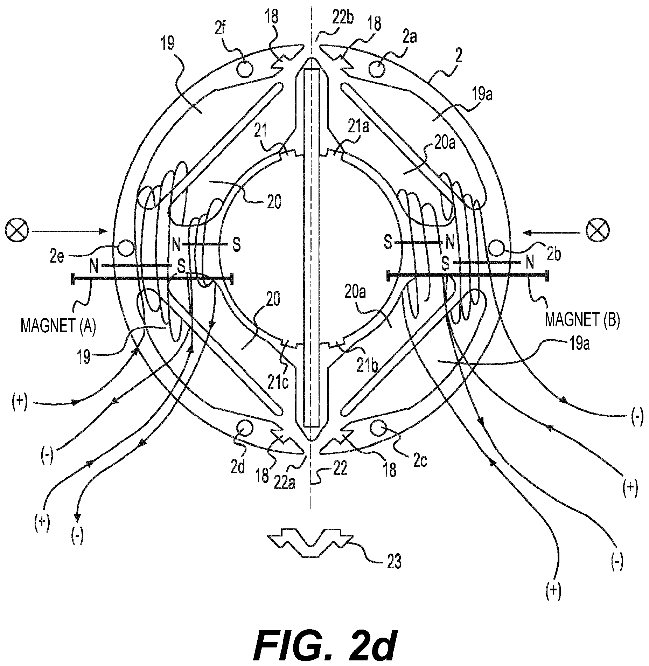

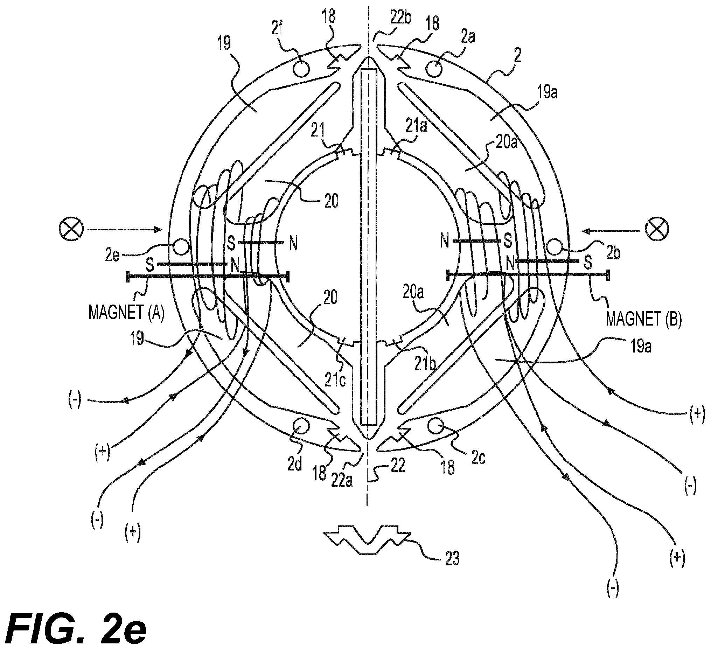

When a conventional dipole rotor, such as illustrated on the left side of FIG. 2, is wired and excited such that both poles of the rotor are either north pole or south pole (i.e., north-north or south-south) toward the observer ⊗ as illustrated on the right side of FIG. 2 and not north-south/south-north or south-north/north-south toward the observer ⊗ as shown on the left side of FIG. 2, the internal poles of rotor bodies #1 and #2 interact to cancel a large portion of the external flux. In the example of FIG. 2, the external flux drops from approximately 4,000 gauss for the dipole configuration to approximately 100 gauss for the uni-pole configuration or a 40-fold deterioration of external flux density.

The uni-pole rotor structure of the current disclosure is actually two complete dipole electromagnets combined and separated by a mu metal steel flux return plate and contained in a single rotor, an example of which is illustrated in FIGs. 2a-2e and described below.

FIG. 2a depicts an exemplary laminate of the rotor body 2 shown in FIG. 1. The laminate is cut from 0.34 mm, for example, electrical steel. As illustrated in FIGs. 2b and 2d, for Magnet (A), winding slots 19 and 20 are wound with appropriate magnet wire and connected such that the outer coil (a) in slot 19 is wound in a counterclockwise fashion in a first polarity (e.g., north N) viewed from the outer surface of the rotor and perpendicular to the coil ⊗. The inner coil (b) in slot 20 of Magnet (A) is wound also in a counterclockwise fashion and connected such that the inner coil is activated to generate the same first polarity as outer coil (a) when viewed ⊗ from the outer surface of the rotor perpendicular to the coils of the rotor portion which makes up Magnet (A). For Magnet (B), winding slots 19a and 20a are also wound with appropriate magnet wire in a counterclockwise fashion and connected such that outer coil (c) and inner coil (d) of Magnet (B) are activated in the first polarity (e.g., north N) when viewed from the outer surface of the rotor and perpendicular to the coil ⊗. Thus, a uni-pole north pole rotor is created. For rotor laminates which when energized create a second polarity (e.g., south S) so that the structure is a uni-pole south pole rotor, as illustrated in FIGs. 2c and 2e, outer coil (a) and inner coil (b) of Magnet (A) in winding slots 19 and 20 are wound in a clockwise fashion (as viewed from ⊗) with appropriate magnet wire and connected such that outer and inner coils of Magnet (A) are activated in the second polarity. Similarly, for Magnet (B), slots 19a and 20a with outer coil (c) and inner coil (d), which are wound in a clockwise direction, are activated such that that portion of the rotor also generates the second polarity (south S). As described above and illustrated, a full north pole face can be generated for 360° of rotor surface, alternated with a full 360° of south pole rotor surface.

Isolation of Magnet (A) side from Magnet (B) side by a mu metal steel laminate flux return plate and/or ring allows full north pole flux, for example, 6,000 gauss, for the full 360° of the rotor surface and allows alternation with south pole flux for 360° of the rotor surface by alternation of (+) and (-) pulse excitation of the leads (see FIGs. 2c and 2e) via an electronic excitation system, such as a solid state MOSFET gating system. That is, the rotor is pulsed first polarity north pole 360° of rotor surface through two leads (+) and (-) and then pulsed second polarity south pole 360° of rotor surface through leads (+) and (-). North pole excitation can alternate 50 or 60 times per second with second polarity south pole for 360° of rotor surface. Alternating polarity excitation is accomplished through the same two leads by utilization of the electronic excitation system.

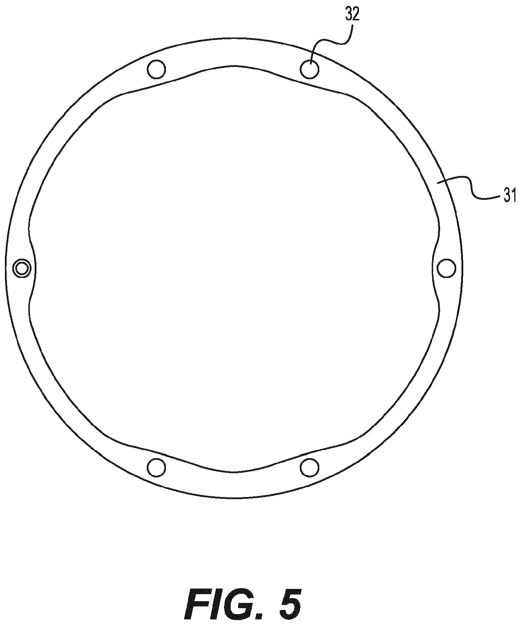

Keyways 21, 21a, 21b, and 21c, shown in FIGs. 2a-2e, are spiraled from the center laminate toward the slip ring and non-slip ring ends of rotor shaft 8 in FIG. 1 in order to accommodate and form the spiral skew of wire slots 22a and 22b of rotor body 2 of FIG. 1. The laminates also contain mu metal shield slot 22 in which a mu metal steel flux return plate will be placed as discussed below. Slot wedges 23 lock into slots 18 to help stabilize the rotor at operating speed. Keyway 21, 21a, 21b, and 21c also align and stabilize the rotor at operating speed. Compression rod holes 2a, 2b, 2c, 2d, 2e, and 2f contain compression rods which also hold retention rings end plates 31, illustrated in FIG. 5, to further stabilize the rotor during operation. When the rotor laminates are stacked on the rotor shaft, the compression rods are put in place, through compression rod holes 2a, 2b, 2c, 2d, 2e, and 2f in the rotor laminates and compression rod holes 32 of the retention rings.

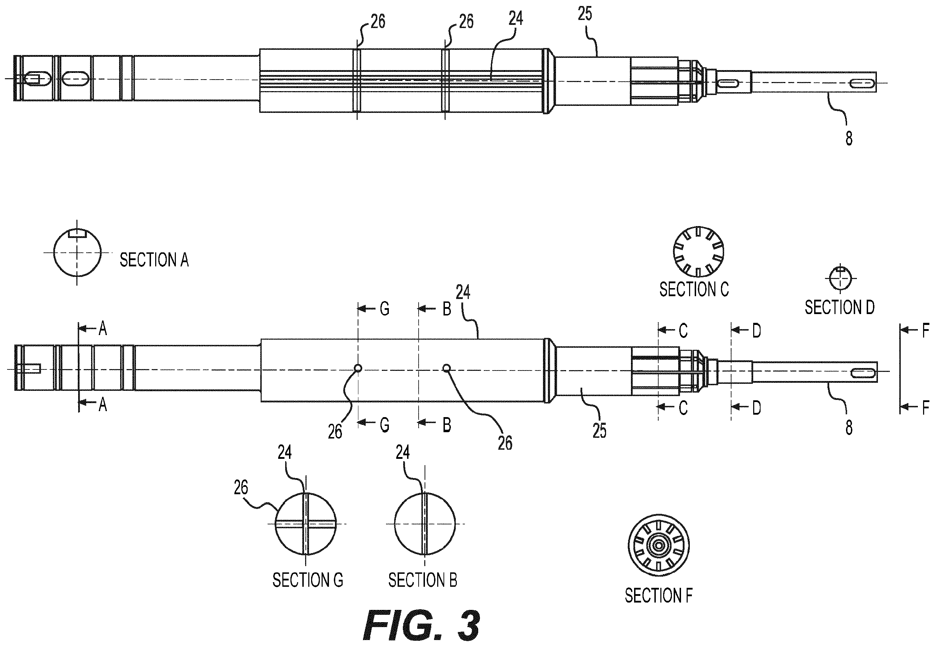

FIG. 3 represents two views of an exemplary uni-pole rotor shaft 25, shaft section 8 of which is illustrated in FIG. 1, with mu metal shield slot 24 and bridge support bolts 26 which are through-tapped in order to retain the structural integrity of the shaft. Slot 24 permits insertion of a spiraled mu metal steel shield which traverses the rotor shaft on which the uni-pole rotor laminates are stacked.

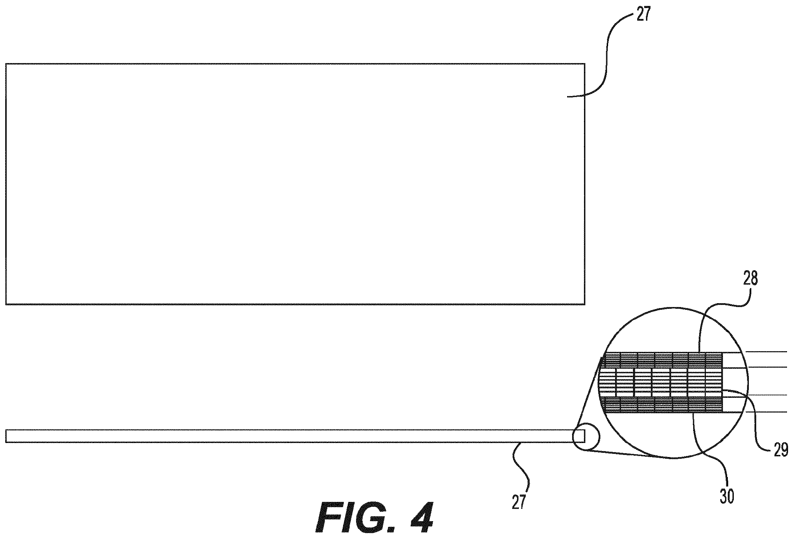

FIG. 4 represents two views of exemplary laminated mu metal shield 27 with a blow up view of mu metal 28, carbon steel 29 and mu metal 30. The laminate is sized to go into mu metal steel slot 24 of rotor shaft 25. As discussed above, a uni-pole rotor includes two complete and separate electromagnets Magnets (A) and (B) illustrated in FIGs. 2b-2d. The electromagnets are separated by spiraled laminated mu metal shield 27. Shield 27 also serves as a guide upon which the rotor laminates are stacked which allows formation of a continuous skew in the wire slots which are designed with a skew which is reversed to the skew of the stator slots.

As discussed above with respect to FIGs. 2a-2e, FIG. 5 represents one of at least two exemplary end retention rings 31 with compression rod holes 32.

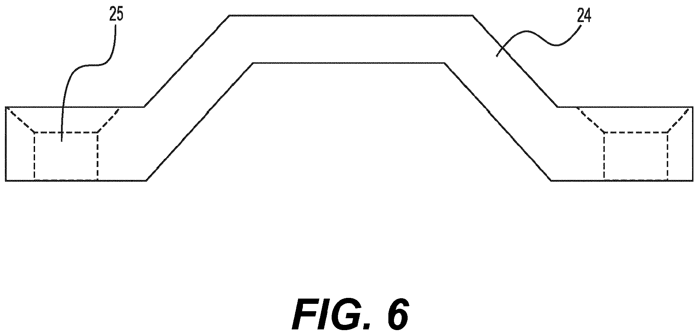

FIG. 6 represents an exemplary tie-down attachment 24, which is bolted to the uni-pole rotor shaft in, for example, a longitudinal fashion by bolt holes 25 and straps down the rotor coil end turns of the rotor.

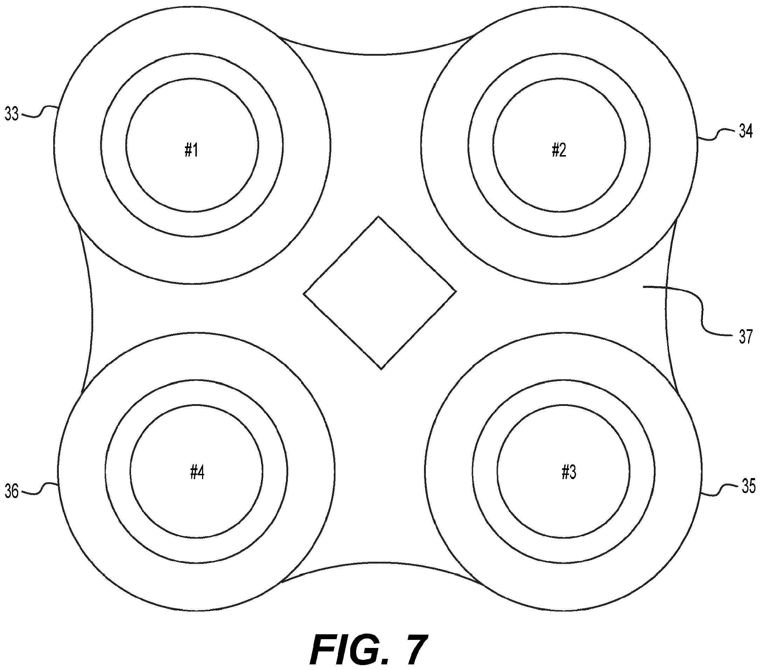

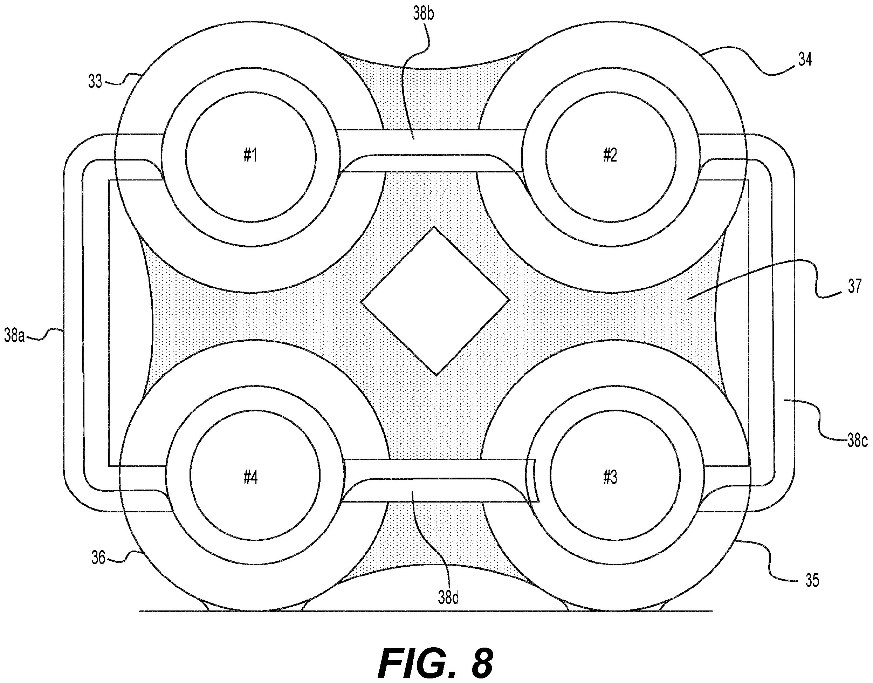

FIG. 7 represents a cross-sectional view of an exemplary single-phase stator section containing four commercial, off the shelf stators 33, 34, 35, and 36. The stators are supported by laminated magnetic pole enhancing electrical steel support structure 37. Rotor cavities #1, #2, #3, and #4 are inside stators 33, 34, 35, and 36, respectively, in which the uni-pole rotors will be placed. Support structure 27 aids in concentrating the stator induction poles in a center area between the stator sections and by geometrically removing any interaction between the induced stator pole and the rotor poles. The stator coils are wound with side 1 of the coil in the slots, illustrated but not numbered, of stator 33 and the second side of the coil in the slots of stator 34 with the coil ends passing through conduit 38b shown in FIG. 8. The second coil is wound with side 1 of the coil in the slots of stator 34 and the second side of the coil in the slots of stator 35 with the coil ends passing through conduit 38c in FIG. 8. The third coil is wound with side 1 of the coil in the slots of stator 35 and the second side of the coil in the slots of stator 36 with the coil ends passing through conduit 38d in FIG. 8. The fourth coil is wound with side 1 of the coil in the slots of stator 36 and the second side of the coil in slots of stator 33 with the coil ends passing through conduit 38a in FIG. 8. Conduits 38a-38d contain the end turns of the coils.

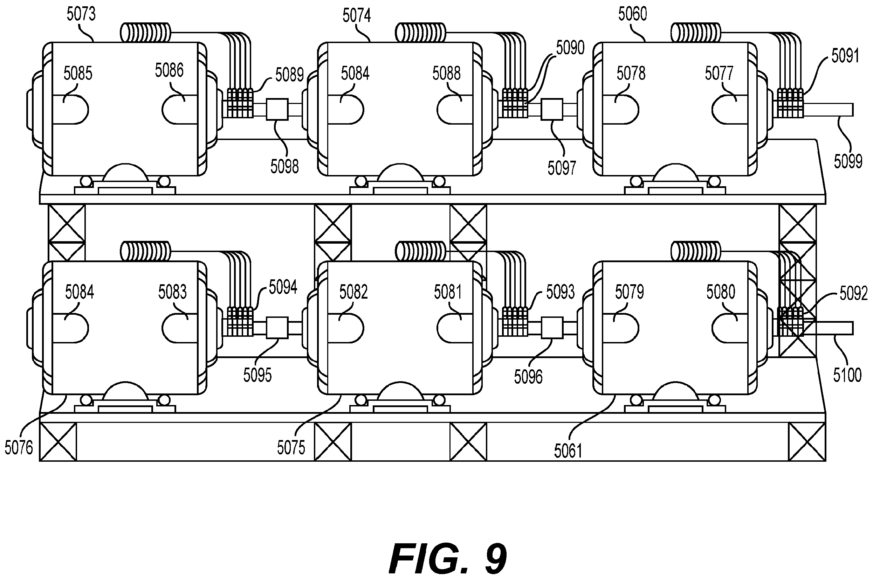

FIG. 9 represents exemplary altered commercial stators with assembled rotors, end bells with bearings, and slip ring excitation arrangements. FIG. 9 also illustrates an embodiment whereby a number, such as 12 conventional generator housings (6 of which are shown) are retrofitted with uni-pole rotors. Generator stators 5060, 5061, 5073, 5074, 5075, and 5076 may be supported by a laminated magnetic pole enhancing electrical steel member. Conduit ports 5077, 5078, 5079, 5080, 5081, 5082, 5083, 5084, 5085, 5086, 5087, and 5088 accommodate the winding coils and coil groups that pass between stators 5060, 5061, 5073, 5074, 5075, and 5076 and with the other half of the generating system, which is not shown. The end bells may be used to support the uni-pole rotors and shafts. Spline couplings 5095, 5096, 5097, and 5098 connect the shafts between the individual generator units. Slip rings and brush mechanisms 5089, 5090, 5091, 5092, 5093, and 5095 may be utilized to carry excitation current to the uni-pole rotor windings. The illustrated embodiment is designed for uni-pole rotors disclosed herein, and therefore each gang of four housings represents one phase of a 3-phase generator.

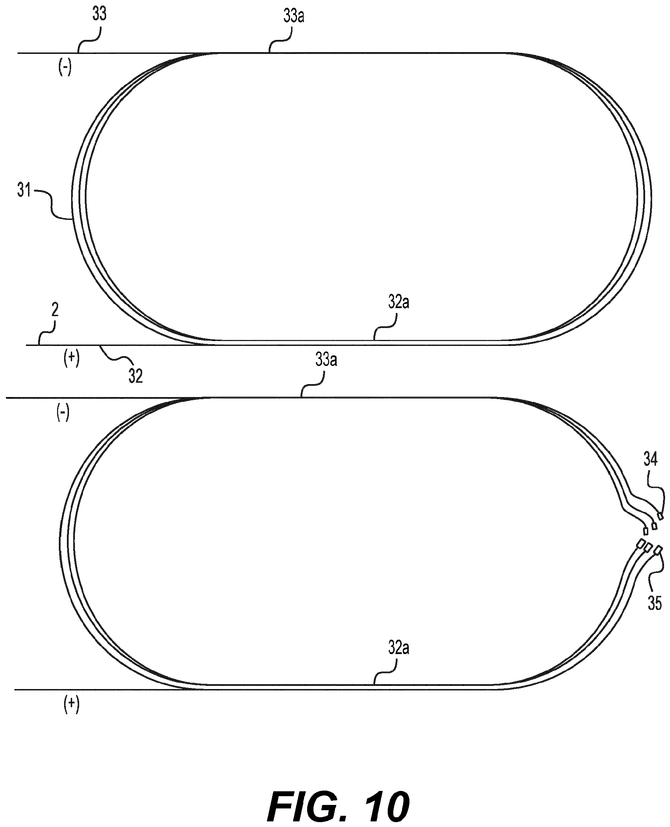

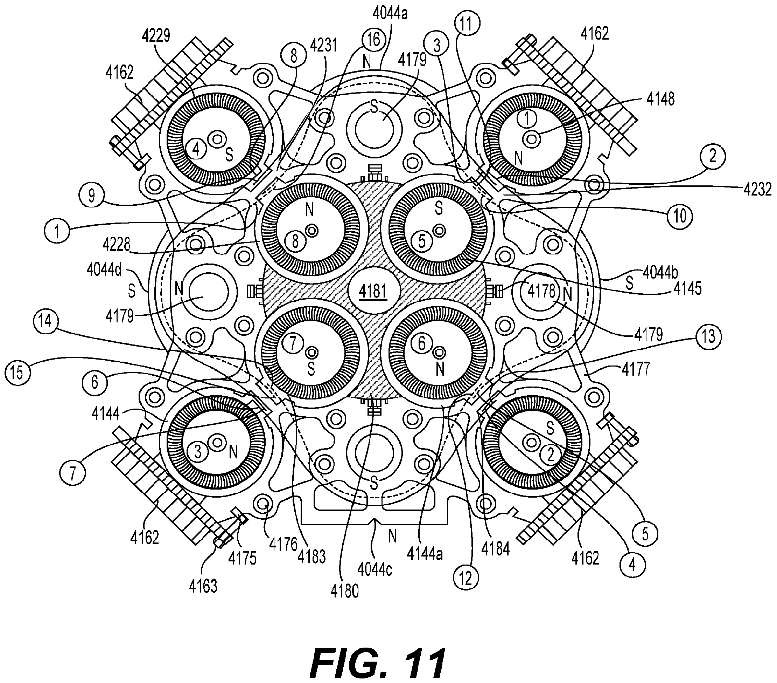

FIG. 10 represents an exemplary stator coil 31 with (+) and (-) leads 32 and 33. Coil 31 includes severed coil turns fitted with separating clips/connectors 34 and 35. The clips/connectors are connected after the coils have been laid into the wire slots as will be discussed further below with respect to the stator/rotor structure illustrated in FIG. 11.

FIG. 11 illustrates a cross section of an exemplary laminated stator 4177 of a generator using uni-pole rotors of the present disclosure. Shown are, among other components, stator iron, stator windings, uni-pole rotors, mu metal shields, and mu metal shield covers. Stator cross section 4177 contains outer circumference rotor cavities 4229 and inner circumference rotor cavities 4228. The outer circumference rotor cavities contain induction wire slots 4184. The inner circumference rotor cavities contain induction wire slots 4183. The rotor cavities are lined with mu metal shields with openings in the shield over the wire slots. The outer circumference rotor cavities contain mu metal shields 4144; the inner circumference rotor cavities contain mu metal shields 4144a. Stator 4177 contains support post holes 4179, torsion bolt holes 4176, and mu metal shield covers. Outer circumference mu metal shield covers 4162 are made of laminated steel, laminated in the same orientation as the stator. The texture of shield covers 4162 appears different to that of the stator; however, this difference is only to contrast the shield covers to the stator. The mu metal shield covers are held in place by retention bolts 4163 which attach to the stator iron in slots 4175. The inner circumference mu metal shield covers 4180 are one piece of laminated steel, which is laminated in the same orientation as the stator laminates. The inner circumference mu metal shield contains a ventilation hole 4181 and attaches to stator laminate 4177 via attachment 4178. Stator 4177 presents, in the area of each induction wire slot, a region of functional side iron 4232, which is not covered by the mu metal shields by intentional design. Shared back iron 4231 is present between the outer circumference rotor slot 4229 and the inner circumference rotor slot 4228. Of the uni-pole rotors 4145, Rotor ① and Rotor (5) form magnetic flux linkage across the side iron, wire slots and shared back iron. Similar flux linkages occur between Rotor ② and Rotor ⑥, Rotor (3) and Rotor ⑦, and Rotor ④ and Rotor ⑧. When these rotors are rotated by a transmission or individual slot rotor motors with the proper magnetic flux density, speed, and north - south excitation, power is generated in the induction coils in slots 4184 and 4183.

There are four outer stator circumference slots 4184 and four inner stator circumference slots 4183. The induction coils are lap wound and connected in series for the outer circumference coils and for the inner circumference induction coils. The power output is single phase AC in this particular arrangement. If three stators are employed in which the rotors in the separate stators are fired 120° out of phase with one another and the neutral leads from each stator are connected together, 3-phase power will be produced. If the rotors are continuously rotated with the same polarity, DC (direct current) will be produced. Uni-pole rotors 4145 rotate on shafts 4148 in a bearing containment mechanism and are rotated by a transmission and drive motor or eight individual rotor drive motors driven by a common variable speed drive. The structure as depicted in FIG. 11 eliminates any electro-magnetic drag either by destructive flux linkage between any stator components or the induced stator poles, which occur when the induction coils are connected to an electric load.

The stator structure and its components provide geometric and shielding benefits which allow the generator to operate with little to no drag forces, i.e., low reverse torque. It should be noted that at constant speed, the generator shaft torque is the only variable in relation to horsepower required to turn the generator shaft at constant speed, such with the proper speed in the case of a 2-pole or 4 pole rotor, proper frequency is maintained. However, with the use of the disclosed uni-pole rotor, the frequency is determined by the excitation system of the uni-pole rotor and not altered by speed. Additionally, the exemplary generator in FIG. 11 requires essentially the same torque to turn the shaft in the electrically loaded and unloaded state and/at various loads. The only energy required is that required to turn the mechanical mechanism. The mechanical forces are related to mechanical resistance (i.e., torque) required to turn the mechanical mechanism and to compensate for the attraction of the magnetic rotors to the iron in the rotor cavities 4228 and 4229 of the stator. However, in the case of this generator disclosed here, the uni-pole rotor and the laminated electrical steel mu metal shields remove these attraction forces. The uni-pole rotors and homogenous stator laminated steel rotor cavities 4228 and 4229 in combination function as a drag-free magnetic bearing of sorts. The other dominant forces which bring about very low electromagnetic drag secondary to stator electric load forces are the geometric positioning of the rotors some distance removed from stator magnetic poles 4044a-4044d. Due to this geometric isolation of the rotor magnet from the stator magnetic field along with mu metal shielding 4144, 4144a around all rotors, the rotor magnetic forces are isolated from the stator magnetic forces. The stator coils associated with inner-outer lead pairs ①-②, (3)-(4), ⑤-⑥, ⑦-⑧, ⑨-⑩, ⑪-⑫, ⑬-⑭, ⑮-⑯ are lap wound and connected in series or in parallel. As illustrated, there are inner stator windings (e.g., the dashed line for leads ⑬ and ⑭) and outer stator windings (e.g., the solid line for leads ① and ②). The inner circumference stator windings are opposite in polarity to the outer circumference stator windings. The opposite polarity between inner circumference of the stator and outer circumference of the stator allows for flux linkage in the area of the support posts 4179 which focuses magnet flux away from the rotor cavities 4229 and 4228. This design also decreases any flux linkage that may occur between the rotor magnetic poles and the stator induced magnetic poles.

With respect to installation of the stator windings, the coils must be bisected as demonstrated in FIG. 10. In order to place the coils in the slots of two adjoining stator/rotor cavities, coils 31 are bisected by separating/connecting clips 34 and 35. One coil side 33a is laid into the slots of, for example, rotor cavity 4229 and the opposite coil side 32a is laid into the slots of, for example, a stator/rotor cavity in the adjacent corner of the stator FIG. 11. The clips 34 and 35 are then joined back, and the coil is shaped and slot wedges are applied. The coil is then tied down to secure it in its position to the stator.

The high efficiency, uni-pole rotor generators of the present disclosure can replace conventional generators and be used in many differing applications to power, for example, electric power grids, electric automotive vehicles (car, truck, buses, etc.), trains, water craft, and aircraft and other flying machines. Additionally, when the uni-pole rotor generators in electric vehicles are not in use to power the motive devices, the generators can provide power to homes, businesses, and the power grid.

**Claims**

1. A uni-pole rotor, comprising:

a rotor body consisting of a plurality of laminates made from an annealed electrical steel disc and stacked on a rotor shaft of the rotor;
a wire slot on either side of the rotor body spiral skewed from a slip ring end to a non- slip ring end of the rotor, wherein the rotor shaft comprises a rest located beyond either ends of the rotor and wherein the rotor further comprises two magnet s and a plurality of winding slots wound with magnetic wires which when activated cause the magnets to become electromagnets and generate a first polarity for 360° of rotor surface;
wherein the two magnets are separated and isolated from each other by a mu metal steel flux return plate;

a slip ring assembly with an eddy current ground and a plurality of rings capable of excitation of a positive lead and a negative lead to the pair of the electromagnets to generate either a first polarity for 360° of rotor surface or a second polarity for 360° of rotor;

a plurality of keyways positioned on a circumference of the laminates in contact with the shaft; wherein each of the plurality of the laminates is disposed at an angle with respect to a previous laminate in the laminate stack such that the keyways are spiraled towards the slip ring end and the non-slip ring end for aligning and stabilizing the rotor laminates, and such that a shield slot in each laminate is spiraled towards the slip ring end and the non-slip ring end to accommodate and form the spiral skew of the wire slot on either side of the rotor body on a circumference furthest from the shaft.

2. The rotor of claim 1, further comprising a pair of slot wedges for locking into corresponding pair of slots positioned on either side of the rotor laminates on the circumference furthest from the shaft, wherein the locking further assisting in aligning and stabilizing the rotor laminates.

3. The rotor of claim 2, further comprising a plurality of compression rod holes positioned on the circumference of the rotor laminates furthest from the shaft, wherein each hole accommodates a compression rod for further assisting in aligning and stabilizing the rotor laminates.

4. The rotor of claim 1, wherein the rotor shaft comprises a plurality of through- tapped bridge support bolts for assisting in aligning and stabilizing the rotor shaft.

5. The rotor of claim 1, wherein the magnetic wires are wound counter-clockwise around the plurality of winding slots so that when the coils are activated, a magnetic flux of a first polarity is produced for 360° of rotor surface.

6. The rotor of claim 1, wherein the magnetic wires are wound clockwise around the plurality of winding slots so that when the coils are activated, a magnetic flux of a second polarity is produced for 360° of rotor surface.

7. The rotor of claim 1, wherein the excitation of a positive lead and a negative lead to a pair of the electromagnets to generate either a first polarity for 360° of rotor surface or a second polarity for 360° of rotor is provided by an electronic excitation system.

8. The rotor of claim 7 wherein the electronic excitation system is a MOSFET gating system.

9. A method for converting energy from electrons into alternating current or direct current with reduced electromagnetic drag or reverse torque using the uni-pole rotor of any previous claim, the method comprising:

combining rotor laminates into a rotor body wherein the laminates include winding wire slots and at least a pair of electromagnets and separating the pair of electromagnets by a laminated mu metal steel flux return plate;
spiraling a shield slot towards a slip ring end and a non-slip ring end for accommodating and forming a spiral skew of wire slots on either side of the rotor body on a circumference furthest from a shaft;
spirally skewing a wire slot on either side of rotor body of rotor laminates from a slip ring end to a non-slip ring end of the rotor shaft of the rotor;
stacking the rotor laminates on the rotor shaft comprising a rest located beyond either ends of the rotor, wherein each rotor laminate is disposed at an angle with respect to a previous laminate in the laminate stack;
positioning a plurality of keyways on a circumference of the rotor body in contact with the shaft;
spiraling the keyways towards the slip ring end and the non-slip ring end for aligning and stabilizing the rotor laminates;
winding a plurality of winding wire slots with a magnetic wire; and
exciting a positive lead and a negative lead to a pair of the electromagnets to generate a full north pole face for 360° of rotor surface alternated with a full south pole face for the 360° of rotor surface.

10. The method of claim 9, further comprising:
making the rotor body from an annealed electrical steel disc cut approximately 0.34 mm thick.

11. The method of claim 9, further comprising locking a pair of slot wedges into corresponding pair of slots positioned on either side of the rotor body on the circumference furthest from the shaft, wherein the locking further assisting in aligning and stabilizing the rotor laminates.

**12.** The method of claim 9, further comprising positioning a plurality of compression rod holes on the circumference of the rotor body furthest from the shaft, wherein each hole accommodating a compression rod for further assisting in aligning and stabilizing the rotor.

**13.** The method of claim 9, wherein the rotor shaft comprising a plurality of through-tapped bridge support bolts for assisting in aligning and stabilizing the rotor shaft.

**14.** The method of claim 9, further comprising winding the rotor coils of the magnetic wire counter-clockwise around the plurality of winding slots and activating the coils to create a magnetic flux of a first polarity for 360° of rotor surface; or further comprising winding the rotor coils of the magnetic wire clockwise around the plurality of winding slots and activating the coils to create a magnetic flux of a second polarity for 360° of rotor surface.

**15.** The method of claim 14, further comprising exciting a positive lead and a negative lead to a pair of the electromagnets to generate either a first polarity for 360° of rotor surface or a second polarity for 360° of rotor by an electronic excitation system.

*FIG. 1*

**FIG. 2**

EP 4 376 277 A2

**FIG. 2a**

FIG. 2b

FIG. 2c

**FIG. 2d**

FIG. 2e

SECTION A

SECTION C

SECTION D

SECTION G

SECTION B

SECTION F

**FIG. 3**

EP 4 376 277 A2

FIG. 4

**FIG. 5**

EP 4 376 277 A2

*FIG. 6*

**FIG. 7**

EP 4 376 277 A2

**FIG. 8**

**FIG. 9**

**FIG. 10**

**FIG. 11**